# EUROPEAN PATENT APPLICATION

(11) **EP 4 783 307 A1**
(43) Date of publication of application: **29.07.2026**
(21) Application number: 25219166.3
(22) Date of filing: 27.11.2025
(51) Int. Cl.: H01M 50/103, H01M 50/15, H01M 50/474

(54) **SECONDARY BATTERY HAVING BOTTOM RETAINER AND METHOD OF MANUFACTURING THE SAME**

(30) Priority: 24.01.2025 KR 20250011756
(71) Applicant: Samsung SDI Co., Ltd., Yongin-si, Gyeonggi-do 17084 (KR)
(72) Inventor: ROH, Heyoungcheoul, Yongin-si, 17084 (KR); BAE, Kwangsoo, Yongin-si, 17084 (KR)
(74) Representative: Marks & Clerk LLP

(57) **Abstract**

A secondary battery includes a battery can having an internal space and an opening, an electrode assembly in the internal space of the battery can, a cap assembly fixed to the opening of the battery can, the cap assembly being connected to the electrode assembly, and a bottom retainer on a bottom portion of the battery can, the bottom retainer holding and supporting the electrode assembly.

## Description

### BACKGROUND

### 1. Field

The present disclosure relates to a secondary battery having a bottom retainer and a method of manufacturing the same.

### 2. Description of the Related Art

Secondary batteries are rechargeable batteries unlike primary batteries that cannot be recharged. Low-capacity batteries may be used in small portable electronic devices such as smartphones, feature phones, notebook computers, digital cameras, and camcorders, and largecapacity batteries are widely used as power sources for driving motors and power storage batteries in hybrid electric vehicles, electric vehicles, and the like.

The secondary battery includes an electrode assembly composed of positive and negative electrodes, an outer material such as a battery can or the like which accommodates the electrode assembly, an electrode terminal connected to the electrode assembly, etc.

The above information disclosed in this Background section is for enhancement of understanding of the background of the present disclosure, and therefore, it may contain information that does not constitute a related art.

### SUMMARY

Embodiments include a secondary battery, including a battery can having an internal space and an opening, an electrode assembly in the internal space of the battery can, a cap assembly fixed to the opening of the battery can, the cap assembly being connected to the electrode assembly, and a bottom retainer on a bottom portion of the battery can, the bottom retainer holding and supporting the electrode assembly.

The bottom retainer may include a main body having a plate shape and a sealed space, and a compressible fluid in the sealed space, the compressible fluid having or providing a support force.

The compressible fluid may be a liquid.

The compressible fluid may include one of an inert gas and air.

The compressible fluid may be the inert gas and the inert gas may include one of argon and nitrogen.

The secondary batter may further include a plurality of protrusions on an upper surface of the main body, the plurality of protrusions being in contact with the electrode assembly, wherein the plurality of protrusions separate the electrode assembly from the main body to reduce an amount of heat transferred from the electrode assembly to the main body.

The secondary battery may further include a support in the sealed space of the main body, the support preventing the main body from being pressed and deformed by a load of the electrode assembly.

The secondary battery may further include a partition inside the main body, the partition partitioning the sealed space into a plurality of independent spaces.

The main body may include a stack of two or more main bodies.

The secondary battery may further include a reinforcing plate between the two or more main bodies.

The secondary battery may further include a load distribution plate on an upper surface of the main body, the load distribution plate preventing the main body from being locally deformed.

Embodiments include a method of manufacturing a secondary battery, the method including preparing a bottom retainer including a main body having a plate shape, a sealed space and a compressible fluid that is in the sealed space, the compressible fluid having or providing a support force, positioning the bottom retainer on a bottom portion of a battery can with an opening upward, the battery can having an internal space, inserting an electrode assembly into the battery can, the bottom retainer supporting the electrode assembly, and fixing a cap assembly to an upper end portion of the battery can.

The compressible fluid may be a liquid.

The compressible fluid may include one of an inert gas and air.

The inert gas may include one of argon and nitrogen.

The method may further include forming a plurality of protrusions on an upper surface of the main body, the plurality of protrusions being in contact with the electrode assembly, and separating the electrode assembly from the main body by the plurality of protrusions to reduce an amount of heat transferred from the electrode assembly to the main body.

The method may further include preventing, by a support, the main body from being pressed and deformed by a load of the electrode assembly, the support being in the sealed space of the main body.

The method may further include partitioning the sealed space into a plurality of independent spaces using a partition inside the main body.

The method may further include forming the main body by stacking two or more main bodies.

The method may further include preventing the main body from being locally deformed using a load distribution plate on an upper surface of the main body.

At least some of the above and other features of the invention are set out in the claims.

### BRIEF DESCRIPTION OF THE DRAWINGS

Features will become apparent to those of ordinary skill in the art by describing in detail example embodiments with reference to the attached drawings, in which:
FIG. 1 is a perspective view illustrating an exterior of a secondary battery according to an embodiment of the present disclosure;
FIG. 2 is a schematic view illustrating an internal structure of the secondary battery illustrated in FIG. 1;
FIG. 3 is a view illustrating a bottom retainer of FIG. 2 that is inserted into a battery can;
FIGS. 4 to 19 are views illustrating various implementation examples of the bottom retainer applied to the secondary battery according to embodiments of the present disclosure;
FIG. 20 is a flowchart for describing a method of manufacturing a secondary battery according to an embodiment of the present disclosure;
FIGS. 21 to 24 are schematic views illustrating the manufacturing method of FIG. 20;
FIG. 25 is a perspective view of a secondary battery pack to which the secondary battery according to an embodiment of the present disclosure is embedded; and
FIG. 26 is a view illustrating the secondary battery pack of FIG. 25 applied to a vehicle.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

The terms or words used in the present specification and claims are not to be narrowly interpreted according to their general or dictionary meanings and should be interpreted as having meanings and concepts that are consistent with the technical idea of the present disclosure on the basis of the principle that an inventor can be his/her own lexicographer to appropriately define concepts of terms to describe his/her disclosure in the best way.

The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any subrange subsumed within the ranges expressly recited herein. All such ranges are intended to be inherently described in this specification such that amending to expressly recite any such subranges would comply with the requirements of patent rules.

References to two compared elements, features, etc. as being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

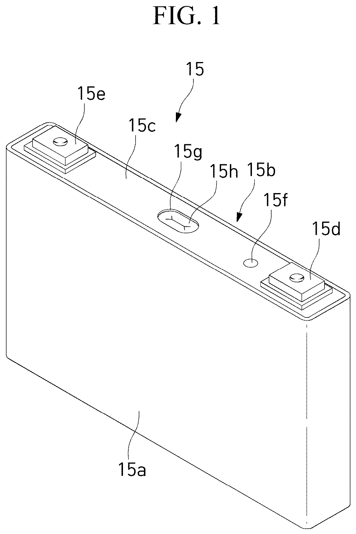

FIG. 1 is a perspective view illustrating an exterior of a secondary battery according to an embodiment of the present disclosure.

A battery can 15a forms the overall exterior of a secondary battery 15 (e.g., a prismatic secondary battery) and may be formed of a conductive metal, such as aluminum, an aluminum alloy, or nickel-plated steel. In addition, the battery can 15a may provide an internal space in which an electrode assembly is accommodated.

A cap assembly 15b may include a cap plate 15c that covers an opening of the battery can 15a. In some examples, the battery can 15a and the cap plate 15c may be formed of a conductive material. Here, a first terminal 15e and a second terminal 15d may be electrically connected to positive and negative electrode tabs inside the battery can 15a and installed to be exposed to the outside of the cap plate 15c.

An electrolyte injection port 15f may be formed at the cap plate 15c, a gas discharge hole 15g may be opened, and a vent, that is, a gas vent part 15h, may be bonded to the gas discharge hole 15g. The gas vent part 15h is opened by gas generated inside the battery to perform degassing.

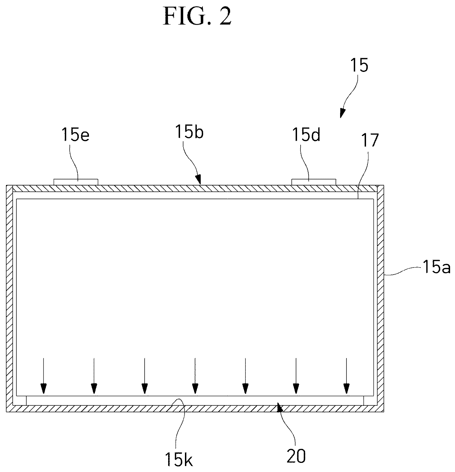

An electrode assembly 17 (see FIG. 2) is mounted inside the secondary battery 15 (e.g., inside the battery can 15a). The electrode assembly 17 is a stack composed of a positive electrode plate, a separator, and a negative electrode plate. The positive electrode plate is coated with a positive electrode active material, and the negative electrode plate is coated with a negative electrode active material. The electrode assembly 17 may be a stacked stack or a wound jelly roll.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel oxide, a lithium cobalt oxide, a lithium manganese oxide, a lithium iron phosphate compound, a cobalt-free nickel-manganese oxide, or a combination thereof.

As an example, a compound represented by any one of the following formulas may be used: LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹aGₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄(0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

A positive electrode for a secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The substrate may be aluminum (Al) but the material may vary.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si negative electrode active material or a Sn negative electrode active material may be used as the material capable of being doped and undoped with lithium. The Si negative electrode active material may be silicon, a silicon-carbon composite, SiOₓ (0 < x ≤ 2), a Si alloy, or a combination thereof.

The silicon-carbon composite may be a composite of silicon and amorphous carbon. According to an embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particles and an amorphous carbon coating layer on the surface of the core.

A negative electrode for a lithium secondary battery may include a substrate and a negative electrode active material layer disposed on the substrate. The negative electrode active material layer may include a negative electrode active material and may further include a binder and/or a conductive material.

For example, the negative electrode active material layer may include about 90 wt % to about 99.5 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose compound capable of imparting viscosity may be further included.

As the negative electrode substrate, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate, an ester, an ether, a ketone, an alcohol solvent, an aprotic solvent, and may be used alone or in combination of two or more.

In addition, when a carbonate solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film including two or more layers thereof may be used.

The separator may include a porous substrate and a coating layer including an organic material, an inorganic material, or a combination thereof on one or both surfaces of the porous substrate.

The organic material may include a polyvinylidene fluoride polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but may vary.

The organic material and the inorganic material may be mixed in one coating layer or may be in the form of a coating layer including (or containing) an organic material and a coating layer including (or containing) an inorganic material which are stacked on each other.

FIG. 2 is a schematic view illustrating an internal structure of the secondary battery 15 illustrated in FIG. 1.

As illustrated, the secondary battery 15 according to the present embodiment may include a battery can 15a, an electrode assembly 17, a cap assembly 15b, and a bottom retainer 20.

The battery can 15a may provide an internal space that opens upward (in the orientation shown) and accommodate the electrode assembly 17 therein. In addition, the cap assembly 15b is fixed to an upper end portion of the battery can 15a and connected to the electrode assembly 17.

Meanwhile, the bottom retainer 20 is a member that is tightly fixed to a bottom portion 15k (in the orientation shown) of the battery can 15a and holds and supports the electrode assembly 17. That is, the bottom retainer 20 holds the electrode assembly 17, thereby preventing the electrode assembly 17 from sagging downward or being tilted to one side due to its own weight or from coming into contact with the bottom portion 15k. When the electrode assembly 17 comes into contact with the bottom portion 15k, an electrical short circuit may occur. In this way, the bottom retainer 20 stably holds and supports the electrode assembly at the bottom of the electrode assembly 17 and has an electrical insulation function.

The bottom retainer 20 may have the shape corresponding to the bottom portion 15k of the battery can 15a. The bottom retainer 20 may have the shape of a rectangular plate having a predetermined thickness.

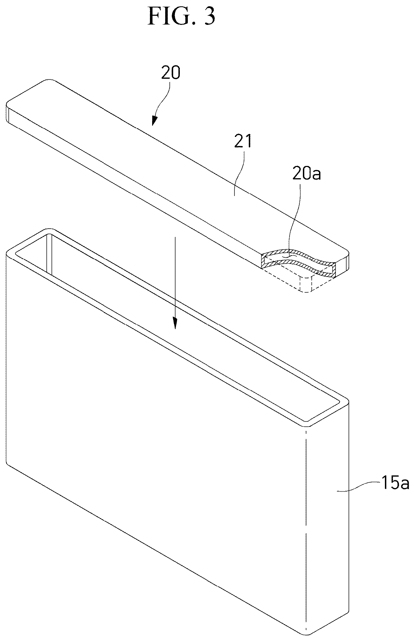

FIG. 3 is a view illustrating the bottom retainer 20 of FIG. 2 inserted into the battery can.

As illustrated, the bottom retainer 20 may have a hollow structure having a sealed space 20a therein. The bottom retainer 20 may include a main body 21 and a fluid sealed in the sealed space 20a. The main body 21 has the form of a plate having a predetermined thickness. The main body 21 is stretchable.

The main body 21 may be formed of polypropylene and may provide sufficient strength and flexibility. That is, the main body 21 may be stretched and deformed by an external force. Such a property acts to support the electrode assembly 17 more stably. A thickness of the main body 21 may range from 50 µm to 150 µm. More preferably, the thickness of the main body 21 may be about 100 µm.

In another embodiment, the main body 21 may be formed of another polymer material having similar properties to polypropylene. The main body 21 may be deformed by an external force. The main body 21 is sealed after injecting a fluid into the sealed space 20a.

The fluid may be a compressible fluid that is injected into the sealed space 20a and provides a support force. The compressible fluid is a fluid that has physical properties that may be compressed by an external force. Liquid or gas may be applied as the fluid.

The gas may include air or an inert gas. In addition, the inert gas may be argon or nitrogen. When the inert gas is used, the bottom retainer 20 is not affected even when an event, such as a fire, occurs in the secondary battery 15. When the sealed space 20a of the main body 21 is filled with gas and the main body 21 is sealed, bottom retainer 20 is formed. By injecting compressible gas into the sealed space 20a, the physical properties of the gas are used to provide a support force. When gas is accommodated in the bottom retainer 20, the bottom retainer is more advantageous in absorbing an external shock and distributing deformation energy. This enables the extension of the lifetime and improvement of the performance of the secondary battery.

In the following description, the bottom retainer 20 having various structures will be described.

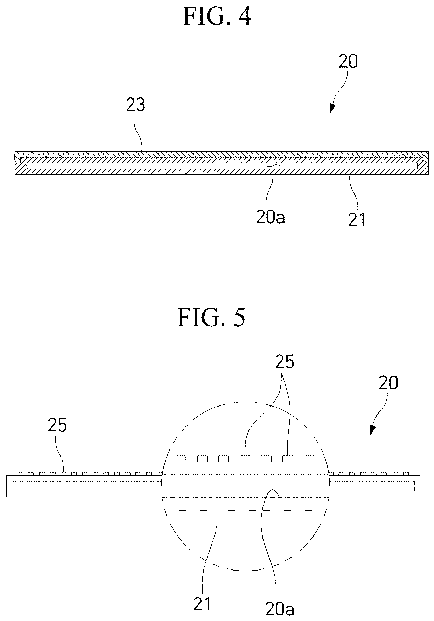

FIGS. 4 to 19 are views illustrating the bottom retainer 20 applicable to the secondary battery 15 according to an embodiment of the present disclosure.

The bottom retainer 20 illustrated in FIG. 4 has a configuration including the main body 21 and a load distribution plate 23. As described above, the main body 21 provides (e.g. encloses) the sealed space 20a. The above fluid may be accommodated in the sealed space 20a.

In addition, the load distribution plate 23 is a plate-shaped member covering the upper surface of the main body 21. The load distribution plate 23 may be a hard synthetic resin plate. The load distribution plate 23 may be detachably inserted into the upper portion of the main body 21. However, the load distribution plate 23 may also be completely fixed through an adhesive. The load distribution plate 23 serves to prevent the main body 21 from being locally deformed. For example, even when the load from the electrode assembly 17 is concentrated on a random point, the concentrated load is widely distributed in a two-dimensional manner. Due to the action of the load distribution plate 23, a stress concentration area is not dented.

The bottom retainer 20 illustrated in FIG. 5 has a plurality of protrusions 25 on the upper surface of the main body 21. The upper surface of the main body 21 refers to a surface in contact with the electrode assembly 17. The protrusions 25 have the same height and may be arranged at a predetermined interval. The protrusions 25 allow the electrode assembly 17 to be spaced apart from the main body 21 to reduce the amount of heat transferred from the electrode assembly to the main body. That is, the electrode assembly 17 is moved upward from the upper surface of the main body 21 to prevent the heat generated from the electrode assembly 17 from being directly transferred to the main body 21.

Since a part of the heat generated from the electrode assembly 17 may be transferred to the main body 21 through only the protrusions 25, the amount of heat transferred to the main body 21 is ultimately significantly reduced compared to when the protrusions 25 are not present.

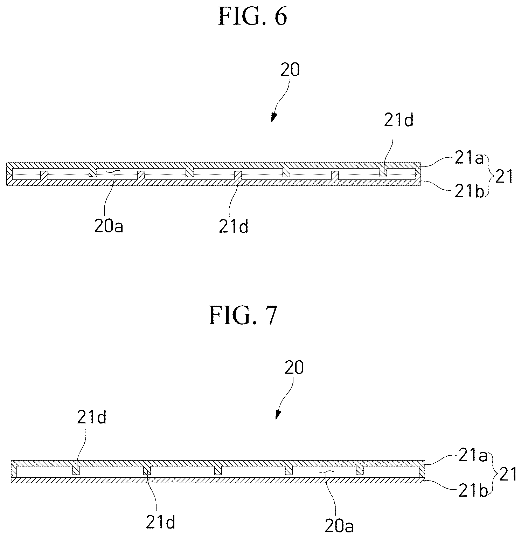

The bottom retainer 20 illustrated in FIG. 6 as an example is formed of a base portion 21b and a cover portion 21a. The base portion 21b and the cover portion 21a are bonded through an adhesive while facing each other to form one of the main body 21. In addition, a support may be further provided inside the main body 21 of the bottom retainer 20 illustrated in FIG. 6.

The support is formed in the sealed space 20a of the main body and serves to prevent the main body from being excessively pressed and deformed by the load of the electrode assembly 17. That is, the support assists to the role of the fluid filled in the sealed space 20a.

In FIG. 6, a plurality of columns 21d are applied as the support. The plurality of columns 21d are fine pillar-shaped members that are formed integrally with a bottom surface of the cover portion 21a and an upper surface of the base portion 21b. The plurality of columns 21d formed on the bottom surface of the cover portion 21a protrude downward and are separated from the base portion 21b. The reason for allowing the columns 21d to be spaced apart from the base portion 21b is to allow the fluid filled inside the sealed space 20a to flow and be distributed at an even density. The columns of the cover portion 21a move downward when a load is applied to the bottom retainer 20 and reach the upper surface of the base portion 21b, thereby preventing the cover portion 21a from further moving downward.

Likewise, the plurality of columns 21d formed on the upper surface of the base portion 21b protrude upward and are spaced apart from the bottom surface of the cover portion 21a. The columns 21d formed on the base portion 21b come into contact with the bottom surface of the cover portion 21a when a load is applied to the bottom retainer 20, thereby preventing the cover portion 21a from further moving downward.

The base portion 21b illustrated in FIG. 7 has a plate-like shape having a predetermined thickness. In addition, a plurality of columns 21d are formed on the bottom surface of the cover portion 21a. The plurality of columns 21d prevent the cover portion 21a from excessively moving downward when a load is applied to the bottom retainer 20. The cover portion 21a and the base portion 21b may be fixed through an adhesive.

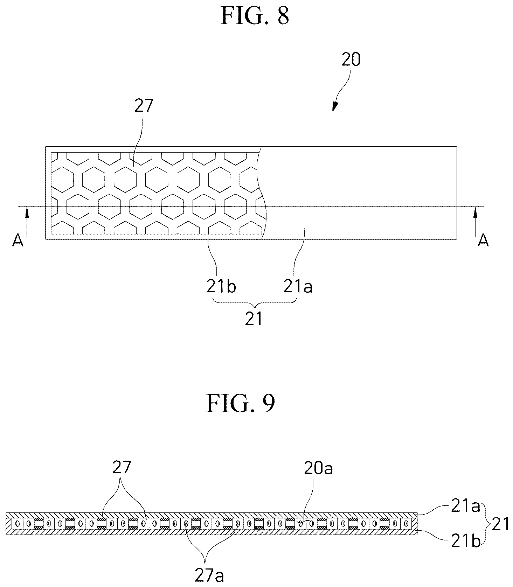

FIG. 8 is a partially cut plan view illustrating an example in which a honeycomb structure 27 is applied as a support. FIG. 9 is a cross-sectional view along line A-A in FIG. 8.

The bottom retainer 20 illustrated in FIGS. 8 and 9 may include the base portion 21b, the cover portion 21a (flat plate-shaped), and the honeycomb structure 27. The honeycomb structure 27 is accommodated between the base portion 21b and the cover portion 21a and receives a load applied from the electrode assembly 17. An upper surface of the honeycomb structure 27 comes into contact with a lower surface of the cover portion. In addition, the lower surface of the honeycomb structure 27 comes into contact with the upper surface of the base portion 21b.

The honeycomb structure 27 may have a repeating hexagonal structure and have a plurality of ventilation holes 27a. Each of the plurality of ventilation holes 27a is a hole provided so that air accommodated in each cell of the honeycomb structure moves to a periphery thereof.

The honeycomb structure 27 may be formed integrally with the base portion 21b or the cover portion 21a. The honeycomb structure 27 may be formed of the same material as the main body 21.

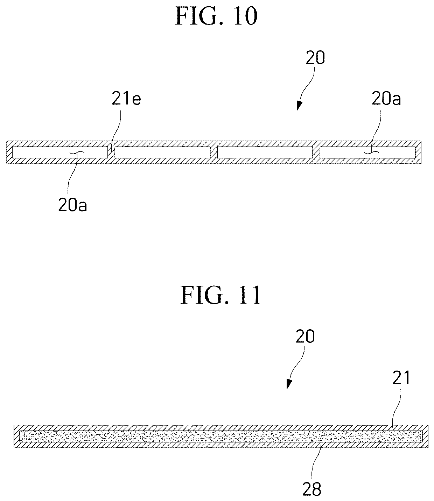

The bottom retainer 20 illustrated in FIG. 10 has a structure in which the sealed space 20a is partitioned into a plurality of spaces by partitions. That is, the plurality of partitions 21e are integrally formed inside the main body 21 to partition the sealed space 20a. Each sealed space 20a is an independent space.

Since the plurality of independent sealed spaces 20a are applied in this way, the retaining function of the bottom retainer may be maintained even when a fine hole is formed in a part of the main body 21. That is, even when a fine hole is formed in a part of the main body 21 to cause a leakage, this hole affects only a sealed space 20a (specific) and does not affect the state of other of the sealed space 20a. Accordingly, it is possible to continuously ensure the function of the system even when structural damage occurs.

In addition, as illustrated in FIG. 11, a porous supporter 28 may be applied to the inside of the main body 21 of the bottom retainer 20. The porous supporter 28 is a structure having an elastic porous structure, such as a sponge. A fluid, that is, air or an inert gas, or a liquid may be accommodated inside pores of the porous supporter 28. As the porous supporter, an aerogel, a silicone foam, or a melamine foam may be applied.

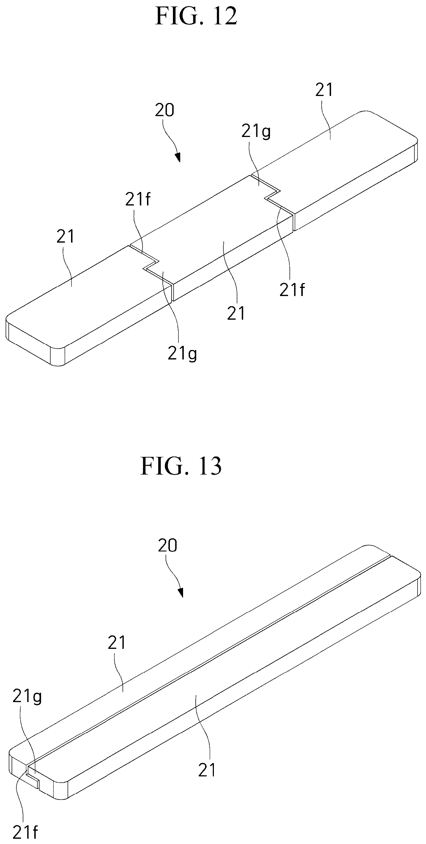

Meanwhile, as illustrated in FIG. 12, the bottom retainer 20 of the present embodiment has a modular structure that may be configured by assembling a plurality of small-sized ones of the main body 21. The adjacent ones of the main body 21 may have a fitting groove or recess 21f and an insertion portion or protrusion 21g to be mutually fitted and coupled.

An advantage of assembling the plurality of ones of the main body 21 in this way is that the support force of each main body 21 may be designed differently. That is, the structure may be flexibly changed according to various needs. For example, the internal pressure of the main body 21 located at the side may be manufactured to be relatively higher than that of the main body 21 located at a central portion, thereby more stably responding to the tilting of the electrode assembly 17.

The bottom retainer 20 illustrated in FIG. 13 is also configured by assembling a plurality of independent ones of the main body 21. FIG. 12 is an example in which the plurality of ones of the main body 21 are assembled in a longitudinal direction, and FIG. 13 is an example in which the plurality of the main body 21 are assembled in a width direction. In order for the plurality of the main body 21 to be mutually assembled, the fitting groove 21f and the insertion portion 21g are formed at facing portions of the main body.

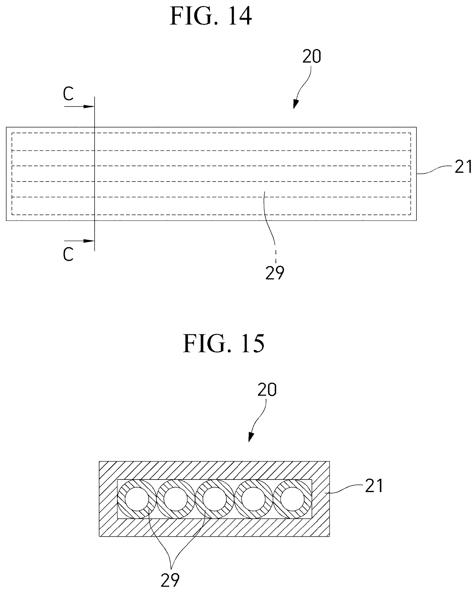

FIGS. 14 and 15 illustrate the bottom retainer 20 of another structure. FIG. 15 is a cross-sectional view along line C-C in FIG. 14.

The bottom retainer 20 of FIGS. 14 and 15 includes the main body 21 and a plurality of elastic tubes 29. Each of the plurality of elastic tubes 29 is a hollow tube that has a predetermined diameter and extends parallel to each other. The plurality of elastic tubes 29 are accommodated inside the main body 21 while being in close contact with each other. Each of the plurality of elastic tubes 29 is flexible and accommodates a fluid therein. That is, the plurality of elastic tubes 29 may accommodate air, an inert gas, or a compressible fluid in some cases. An external space of the plurality of elastic tubes 29 and an internal space of the main body 21 may be filled with air. The elastic support force in the bottom retainer 20 of FIGS. 14 and 15 may be generated from the plurality of elastic tubes 29.

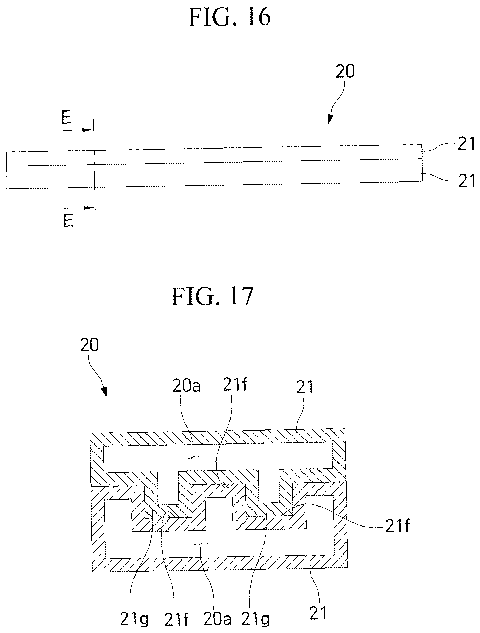

FIGS. 16 and 17 are views illustrating the bottom retainer 20 of still another structure. FIG. 17 is a cross-sectional view along line E-E in FIG. 16.

As illustrated, the bottom retainer 20 may be composed of two stacked ones of the main body 21. A lower one of the main body 21 (e.g., lower in the orientation shown) comes into close contact with the bottom portion 15k of the battery can, and the remaining upper one of the main body 21 is stacked on the lower one of the main body 21. The fitting groove 21f and the insertion portion 21g that are mutually fitted and coupled are formed on an upper surface of the lower one of the main body 21 and a bottom surface of an upper main body. Since the bottom retainer 20 has a structure in which the insertion portion 21g is inserted into the fitting groove 21f, the bottom retainer 20 is distorted during use.

When the main body 21 is formed in a stacked manner in this way, the electrode assembly 17 (high load) can be supported more stably. In FIG. 16, two ones of the main body 21 are stacked, but a stack of three or more of the main body may be used.

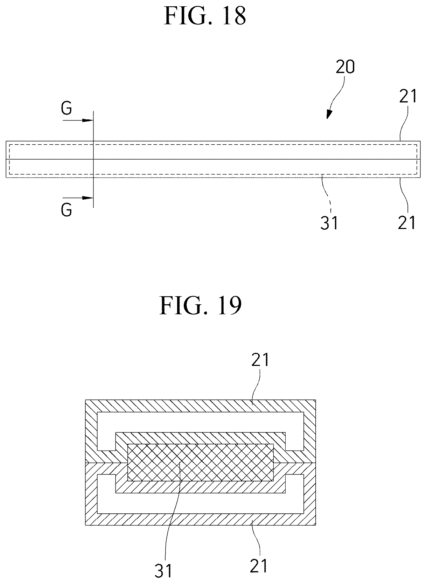

FIGS. 18 and 19 are views illustrating the bottom retainer 20 of yet another structure. FIG. 19 is a cross-sectional view along line G-G in FIG. 18.

The bottom retainer 20 illustrated has a reinforcing plate 31 between the two stacked ones of the main body 21. The reinforcing plate 31 is a plate-shaped member formed of a hard synthetic resin. The reinforcing plate 31 may have a predetermined width and thickness. The reinforcing plate 31 may reinforce the structural strength of the bottom retainer 20 and also serve as the load distribution plate 23 described with respect to FIG. 4. That is, the load generated from the electrode assembly 17 can be effectively distributed to prevent deformation or damage to the bottom retainer.

The reinforcing plate 31 may be completely embedded in the main body 21, thereby increasing the sense of unity of the structure and further improving stability. The size of the reinforcing plate 31 may vary according to the size and weight of the electrode assembly 17. The reinforcing plate 31 may be applied to secondary batteries of various sizes and may maintain high stability even in a high-load environment.

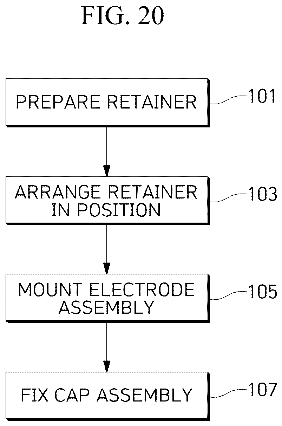

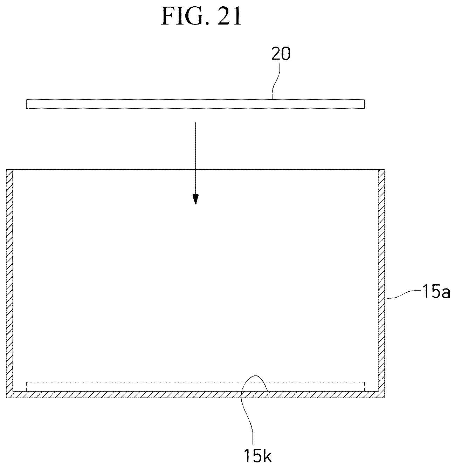

FIG. 20 is a flowchart for describing a method of manufacturing a secondary battery according to an embodiment of the present disclosure, and FIGS. 21 to 24 are schematic views illustrating the manufacturing method illustrated in FIG. 20.

As illustrated, the method of manufacturing a secondary battery according to the present embodiment may include a retainer preparing operation 101, a retainer positioning operation 103, an electrode assembly mounting operation 105, and a cap assembly fixing operation 107.

The retainer preparing operation 101 is a process of preparing the bottom retainer 20. As described above, the bottom retainer 20 may include a main body having a plate shape and the sealed space 20a, and a compressible fluid that is injected into the sealed space 20a and provides a support force. In addition, an area of the bottom retainer 20 corresponds to (e.g., is the same as or similar to) an area of the bottom portion 15k of the battery can 15a.

The retainer positioning operation 103 is a process of inserting the bottom retainer 20 into the separately prepared battery can 15a and bringing the bottom retainer 20 into close contact with the bottom portion 15k of the battery can (see FIG. 21). In this case, the bottom surface of the bottom retainer 20 and an upper surface of the bottom portion 15k of the battery can 15a may be coated with a heat-resistant adhesive.

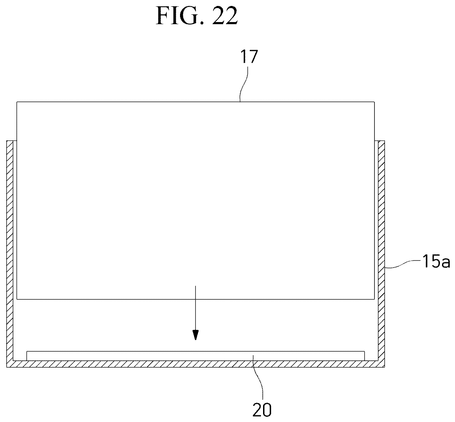

As illustrated in FIG. 22, the electrode assembly mounting operation 105 may be a process of inserting the electrode assembly 17 into the battery can 15a on which the bottom retainer 20 is mounted so that the electrode assembly is supported by the bottom retainer. That is, the electrode assembly mounting operation 105 may include a process of seating a bottom surface of the electrode assembly 17 on an upper surface of the bottom retainer 20.

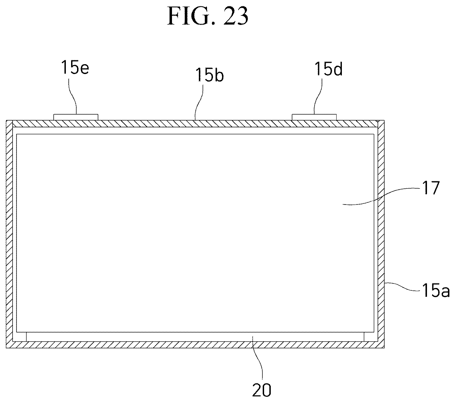

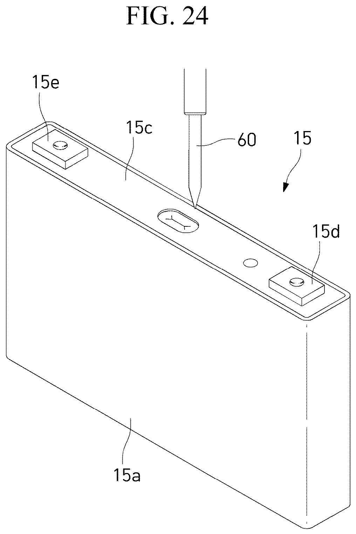

When the setting of the electrode assembly 17 is completed through the above process, the cap assembly fixing operation 107 may be performed. The cap assembly fixing operation 107 may include a process of positioning the cap assembly 15b on the upper end (open) portion of the battery can 15a, and welding an edge of the cap assembly 15b and the upper end portion of the battery can 15a using a welder 60 (see FIGS. 23 and 24).

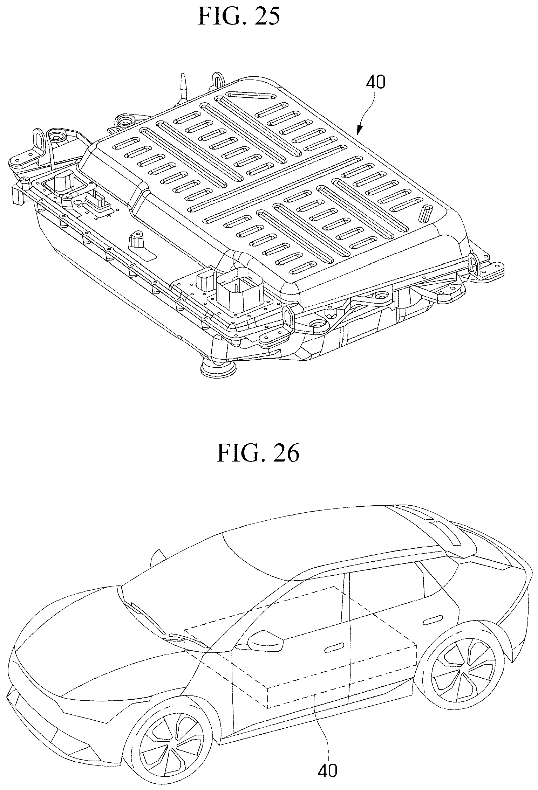

FIG. 25 is a perspective view of a secondary battery pack to which the secondary battery according to an embodiment of the present disclosure is embedded.

A secondary battery pack 40 can be manufactured by embedding a number of secondary battery modules in a pack housing designed to be mounted on an actual product. The pack housing may include fasteners and electrical outlets that are required for product mounting. In FIG. 25, for convenience of illustration, components including a bus bar, a cooling unit, external terminals for electrically connecting batteries, etc., are omitted. The secondary battery pack may be mounted on a vehicle. The vehicle may be, for example, an electric vehicle, a hybrid vehicle, or a plug-in hybrid vehicle. The vehicle may be a four-wheeled vehicle or a two-wheeled vehicle but may vary.

FIG. 26 is a view illustrating the secondary battery pack of FIG. 25 applied to a vehicle. FIG. 26 illustrates the secondary battery pack 40 according to an embodiment of the present disclosure, which is mounted under a vehicle body of a vehicle. The vehicle is operated by receiving power from the secondary battery pack 40 according to an embodiment of the present disclosure.

The recent development direction of medium and large prismatic secondary batteries is to increase a space usage rate in modules and packs through enlargement. However, when enlarging a secondary battery, a structure according to an increase in a weight of the electrode assembly needs to be applied. This can cause an increase in material cost and a decrease in processability of parts manufacturing.

In particular, in the case of a top terminal type secondary battery, when the weight of the electrode assembly increases, the electrode assembly can be tilted or sagged to one side in a battery can, causing electrical contact with a bottom surface of the battery can to cause a short circuit. There is a need for a structure for preventing tilting or sagging due to the weight of the electrode assembly.

According to a secondary battery of the present disclosure, it is possible to prevent an electrode assembly from tilting or sagging and prevent the electrode assembly from coming into contact with a bottom of a battery can through a bottom retainer installed on a bottom portion of the battery can, thereby improving electrical safety and preventing damage to parts due to a weight of the electrode assembly.

Although the present disclosure has been described above with respect to embodiments thereof, the present disclosure is not limited thereto. Various modifications and variations can be made thereto by those skilled in the art within the scope of the present disclosure as defined by the appended claims and their equivalents.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of ordinary skill in the art that various changes in form and details may be made without departing from the scope of the present invention as set forth in the following claims.

## Claims

1. A secondary battery, comprising:
a battery can having an internal space and an opening;
an electrode assembly in the internal space of the battery can;
a cap assembly fixed to the opening of the battery can, the cap assembly being connected to the electrode assembly; and
a bottom retainer on a bottom portion of the battery can, the bottom retainer holding and supporting the electrode assembly.

2. The secondary battery as claimed in claim 1, wherein the bottom retainer comprises:
a main body having a plate shape and a sealed space, and
a compressible fluid in the sealed space, the compressible fluid having a support force.

3. The secondary battery as claimed in claim 2, wherein the compressible fluid comprises one of liquid, an inert gas, and air.

4. The secondary battery as claimed in claim 2 or 3, further comprising a plurality of protrusions on an upper surface of the main body, the plurality of protrusions being in contact with the electrode assembly, wherein the plurality of protrusions separate the electrode assembly from the main body to reduce an amount of heat transferred from the electrode assembly to the main body.

5. The secondary battery as claimed in claim 2, 3 or 4, further comprising a support in the sealed space of the main body, the support preventing the main body from being pressed and deformed by a load of the electrode assembly.

6. The secondary battery as claimed in any one of claims 2 to 5, further comprising a partition inside the main body, the partition partitioning the sealed space into a plurality of independent spaces.

7. The secondary battery as claimed in any one of claims 2 to 6, wherein the main body includes a stack of two or more main bodies.

8. The secondary battery as claimed in any one of claims 2 to 7, further comprising a load distribution plate on an upper surface of the main body, the load distribution plate preventing the main body from being locally deformed.

9. A method of manufacturing a secondary battery, the method comprising:
preparing a bottom retainer including a main body having a plate shape, a sealed space and a compressible fluid that is in the sealed space, the compressible fluid having a support force;
positioning the bottom retainer on a bottom portion of a battery can with an opening upward, the battery can having an internal space;
inserting an electrode assembly into the battery can, the bottom retainer supporting the electrode assembly; and
fixing a cap assembly to an upper end portion of the battery can.

10. The method as claimed in claim 9, wherein the compressible fluid comprises one of a liquid, an inert gas, and air.

11. The method as claimed in claim₁₄₈₃₀₄₅₀₋₁ 9 or 10, further comprising:
forming a plurality of protrusions on an upper surface of the main body, the plurality of protrusions being in contact with the electrode assembly; and
separating the electrode assembly from the main body by the plurality of protrusions to reduce an amount of heat transferred from the electrode assembly to the main body.

12. The method as claimed in claim 9, 10 or 11, further comprising preventing, by a support, the main body from being pressed and deformed by a load of the electrode assembly, the support being in the sealed space of the main body.

13. The method as claimed in any one of claims 9 to 12, further comprising partitioning the sealed space into a plurality of independent spaces using a partition inside the main body.

14. The method as claimed in any one of claims 9 to 13, further comprising forming the main body by stacking two or more main bodies.

15. The method as claimed in any one of claims 9 to 14, further comprising preventing the main body from being locally deformed using a load distribution plate on an upper surface of the main body.
